# EUROPÄISCHE PATENTANMELDUNG

(11) **EP 1 283 087 A2**
(43) Veröffentlichungstag der Anmeldung: **12.02.2003**
(21) Anmeldenummer: 02017139.3
(22) Anmeldetag: 30.07.2002
(51) Int. Cl.: B23K 9/067, B23K 9/167, B23K 9/00

(54) **Verfahren und Vorrichtung zum Schweissen**

(30) Priorität: 07.08.2001 DE 10138788; 12.12.2001 DE 10161091
(71) Anmelder: Lampert Werktechnik GmbH, 97440 Werneck (DE)
(72) Erfinder: Lampert, Harald, 97440 Werneck (DE)
(74) Vertreter: Böck, Bernhard, Dipl.-Ing.

(57) **Zusammenfassung**

Die Erfindung betrifft ein Verfahren und eine Vorrichtung zum Schweißen, insbesondere zum Herstellen kleiner und kleinster Schweißpunkte. Bei dem Verfahren wird ein Schweißhandstück mit einer Schweißelektrode (4) an das zu schweißende Gut herangeführt und der Schweißvorgang durch Fluss eines elektrischen Stromes durchgeführt. Zum präzisen Schweißen ist erfindungsgemäß vorgesehen, dass das Verfahren folgende Schritte aufweist: a) Aufsetzen der Schweißelektrode (4) auf das zu schweißende Gut bei abgeschaltetem Schweißstrom; b) Einschalten des Schweißstromes; c) Zurückziehen der Schweißelektrode (4) um einen vorbestimmten Weg durch Aktivieren eines Mittels (2, 2a, 2b), das eine translatorische Verschiebung der Schweißelektrode (4) veranlasst, um durch Schaffung eines Abstandes (15) zwischen Schweißelektrode (4) und zu schweißendem Gut einen Lichtbogen zu erzeugen; d) Durchführung des Schweißvorganges unter Nutzung der vom Lichtbogen erzeugten Temperaturerhöhung.

## Beschreibung

Die Erfindung betrifft ein Verfahren zum Schweißen, insbesondere zum Herstellen kleiner und kleinster Schweißpunkte, bei dem ein Schweißhandstück mit einer Schweißelektrode an das zu schweißende Gut herangeführt und der Schweißvorgang durch Fluss eines elektrischen Stromes durchgeführt wird. Des weiteren betrifft die Erfindung eine Vorrichtung zum Schweißen.

Das Schweißen durch Verwendung elektrische Energie ist bekannt. Bei bekannten Kondensatorimpulsschweiß- oder Impulsschweißgeräten wird meist das Widerstandsschweißen angewendet. Hier werden zwei Werkstücke miteinander in Kontakt gebracht und durch den Stromimpuls an der Kontaktstelle verschweißt. Es können auch zwei Elektroden aufgesetzt werden, zwischen denen die Werkstücke dann verschweißt werden.

Auch das Schweißen durch Nutzung der Energie eines Lichtbogens ist im Stand der Technik hinlänglich bekannt. Zum Schweißen wird eine Schweißelektrode eingesetzt, die häufig aus Wolfram besteht. Sie ist an ihrem Ende spitz ausgeformt und wird an das zu schweißende Gut herangeführt. Vor dem eigentlichen Schweißvorgang werden Kondensatoren elektrisch geladen, die beispielsweise von einer Thyristorsteuerung zu einem vorgegebenen Zeitpunkt entladen werden. Es entsteht zwischen Schweißelektrode und Schweißgut ein Lichtbogen, der das zu schweißende Gut zum Schmelzen bringt, wodurch der Schweißvorgang bewerkstelligt wird.

Das gattungsgemäße Schweißverfahren sowie Vorrichtungen zu seiner Durchführung sind beispielsweise aus der DE 43 13 502 A1, der DE 42 01 247 A1, der DE 43 31 200 C1, der US 3,133,187 und der US 2,892,925 bekannt. Die dort offenbarten Schweißverfahren und Schweißvorrichtungen eignen sich zwar grundsätzlich zur Realisierung des Lichtbogenschweißens, allerdings weisen sie wesentliche Nachteile auf.

Insbesondere für die Herstellung von Schmuck eignet sich das Lichtbogenschweißen besonders, vor allem, wenn es - wie häufig üblich - unter einer Schutzgasatmosphäre durchgeführt wird. Hierzu wird der Schweißstelle ein inertes Gas wie beispielsweise Argon zugeleitet. Allerdings kommt es bei der Herstellung von Schmuck in besonderer Weise darauf an, dass präzise Schweißnähte bzw. Schweißpunkte gesetzt werden können.

Die vorbekannten Verfahren und Vorrichtungen eignen sich hierfür nicht. Meist ist es nicht möglich, den Kontaktpunkt des Lichtbogens am zu schweißenden Gut genau zu bestimmen. Vielmehr springt der Lichtbogen im Bereich des kleinsten Abstandes zwischen Schweißelektrode und zu schweißendem Gut über, jedoch nicht punktgenau, worauf es bei der Schmuckherstellung jedoch entscheidend ankommt, da ansonsten die äußere Erscheinung des hergestellten Schmucks negativ beeinflusst wird.

Der Erfindung liegt daher die Aufgabe zugrunde, ein Verfahren sowie eine zugehörige Vorrichtung zu schaffen, mit dem bzw. mit der das gattungsgemäße Lichtbogenschweißen in einer solchen Weise durchführbar ist, dass kleine und kleinste Schweißpunkte exakt auf dem zu schweißenden Gut positioniert werden können. Die Vorrichtung soll sich durch einen einfachen Aufbau auszeichnen und damit wirtschaftlich herstellbar sein.

Die Lösung dieser Aufgabe durch die Erfindung ist dadurch gekennzeichnet, dass sie die folgenden Schritte aufweist:
a) Zunächst wird die Schweißelektrode auf das zu schweißende Gut bei abgeschaltetem Schweißstrom aufgesetzt.
b) Anschließend wird der Schweißstrom eingeschaltet.
c) Danach erfolgt ein automatisches Zurückziehen der Schweißelektrode um einen vorbestimmten Weg durch Aktivieren eines Mittels, das eine translatorische Verschiebung der Schweißelektrode veranlasst, um durch Schaffung eines Abstandes zwischen Schweißelektrode und zu schweißendem Gut einen Lichtbogen zu erzeugen.
d) Anschließend wird der Schweißvorgang unter Nutzung der vom Lichtbogen erzeugten Temperaturerhöhung durchgeführt.

Dieses Verfahren zeichnet sich dadurch aus, dass durch die drei ersten Verfahrensschritte exakt vorherbestimmbar ist, wo der Lichtbogen das zu schweißende Gut kontaktiert. Es wird somit möglich, kleine und kleinste Schweißpunkte geometrisch genau zu platzieren.

Gemäß einer ersten Fortbildung ist vorgesehen, dass obiger Schritt b) nach einer vorgebbaren Zeit erfolgt, nachdem der Kontakt zwischen Schweißelektrode und zu schweißendem Gut hergestellt ist. Hierbei ist bevorzugt daran gedacht, dass die vorgebbare Zeit zwischen 0,5 und 10 Sekunden, vorzugsweise zwischen 2 und 4 Sekunden, liegt.

Ferner kann obiger Schritt c) nach einer vorgebbaren Zeit erfolgen, nachdem der Schweißstrom eingeschaltet ist; hier ist an Zeiten zwischen 0,5 und 50 Millisekunden gedacht.

Mit Vorteil ist vorgesehen, dass durch an sich bekannte Schweißstromsteuerungen der Schweißstrom nach seinem Einschalten nicht schlagartig, sondern allmählich ansteigt.

Das Schweißergebnis lässt sich - wie bereits oben erwähnt - verbessern, wenn zumindest während des obigen Schrittes d), vorzugsweise sogar zumindest während der Schritte b) bis d), ein inertes Gas, vorzugsweise Argon, zwischen das zu schweißende Gut und die Schweißelektrode geleitet wird. Dabei ist bevorzugt vorgesehen, dass die Einleitung des inerten Gases zwischen das zu schweißende Gut und die Schweißelektrode automatisch gestartet wird, sobald die Schweißelektrode auf das zu schweißende Gut aufgesetzt ist.

Damit der Lichtbogen für den Schweißer nicht überraschend auftritt, ist mit Vorteil vorgesehen, dass vor dem Einschalten des Schweißstromes ein Signal, insbesondere ein akustisches Signal, ausgelöst wird. Das erfolgt vorzugsweise 0,5 bis 2 Sekunden, vorzugsweise 1 Sekunde, vor dem Einschalten des Schweißstromes.

Es hat sich als vorteilhaft herausgestellt, wenn das Zurückziehen der Schweißelektrode nach obigem Schritt c) um einen translatorischen Verschiebebetrag von weniger als 5 Millimeter, vorzugsweise um einen Verschiebebetrag zwischen 1 und 2 Millimetern, erfolgt.

Die Vorrichtung zum Schweißen, insbesondere zum Herstellen kleiner und kleinster Schweißpunkte, weist ein Schweißhandstück mit einer Schweißelektrode auf, die an das zu schweißende Gut herangeführt und der Schweißvorgang durch Fluss eines elektrischen Stromes durchgeführt wird. Erfindungsgemäß ist vorgesehen, dass die Schweißelektrode relativ zum Schweißhandstück translatorisch verschiebbar angeordnet ist, wobei zur translatorischen Verschiebung im Schweißhandstück Bewegungsmittel angeordnet sind.

Insbesondere ist vorgesehen, dass die Bewegungsmittel aus einem elektrischen Magneten bestehen, der die Schweißelektrode zwischen mindestens zwei Stellungen hin- und her bewegen kann. Die von dem Bewegungsmittel veranlasste translatorische Verschiebung beträgt bevorzugt weniger als 5 Millimeter, vorzugsweise zwischen 1 und 2 Millimeter.

Ein einfacher konstruktiver Aufbau lässt sich erzielen, wenn die Bewegungsmittel, insbesondere der elektrische Magnet, eine zylinderförmige Spule und eine in dieser konzentrisch geführte Stange aufweisen, wobei Spule und Stange in einem abschnittsweise rohrförmigen Gehäuse des Schweißhandstücks so angeordnet sind, dass ihre Längsachsen in Achsrichtung des Gehäuses verlaufen. Die Schweißelektrode kann direkt oder indirekt von einer Hubstange gehalten sein, die mit den Bewegungsmitteln, also insbesondere mit der Stange des elektrischen Magneten, verbunden ist, wobei die Hubstange konzentrisch im Gehäuse des Schweißhandstücks verläuft.

Damit nach erfolgtem Schweißvorgang die Vorrichtung wieder in ihre Ausgangslage zurückkehrt, ist bevorzugt vorgesehen, dass die Bewegungsmittel, insbesondere der elektrische Magnet, mit einem elastischen Element in Verbindung stehen, das die Schweißelektrode in eine translatorische Richtung vorspannt. Bei dem elastischen Element handelt es sich bevorzugt um eine Schraubenfeder. Dabei spannt das elastische Element, also insbesondere die Schraubenfeder, die Schweißelektrode in Richtung auf das zu schweißende Gut zu vor.

Zur Bewerkstelligung des Schweißvorgangs selber ist vorgesehen, dass die Schweißelektrode elektrisch mit einer Stromversorgungseinrichtung verbindbar ist, die mindestens einen Kondensator, vorzugsweise eine Anzahl gestapelter Kondensatoren, aufweist. Ferner kann die Vorrichtung eine elektronische Schalt-, Steuer- und/oder Regeleinheit, insbesondere einen Mikroprozessor, aufweisen, die zumindest die translatorische Bewegung der Schweißelektrode und den Fluss des elektrischen Stromes zwischen Schweißelektrode und zu schweißendem Gut veranlasst, steuert oder regelt. Dabei ist insbesondere vorgesehen, dass die Vorrichtung mehrere voneinander unabhängig schaltbare Leistungstransistoren zum Schalten des Schweißstromes aufweist, die von der elektronischen Schalt-, Steuer- und/oder Regeleinheit, insbesondere von dem Mikroprozessor, angesteuert werden. Die Leistungstransistoren können so schaltbar sein, dass unterschiedlich hohe Schweißströme zwischen Schweißelektrode und zu schweißendem Gut wirken.

Die Schweißelektrode besteht vorzugsweise aus Wolfram.

Die erfindungsgemäße Vorrichtung kann mit einer Einrichtung zur Ansteuerung eines LCD-Schweißersichtschutzfilters ausgestattet sein kann, mit dem insbesondere durch entsprechende Ansteuerung durch die Einrichtung eine zeitweise Abblendung des Lichts des Lichtbogens erfolgen kann, um eine Schädigung der Augen des Schweißers zu verhindern. Diese Einrichtung zur Ansteuerung des LCD-Schweißersichtschutzfilters kann hardwaremäßig, beispielsweise durch eine Schaltanordnung oder dergleichen, und/oder softwarebasiert realisiert werden. Ferner kann diese Einrichtung Teil der Schalt-, Steuer- und/oder Regeleinheit der Vorrichtung sein.

Mit dem vorgeschlagenen Verfahren und der Vorrichtung können verschiedene Vorteile erreicht werden:
- Es können kleine und kleinste Schweißpunkte exakt positioniert erzeugt werden. Insbesondere können Schweißpunkte von weniger als 1 mm Größe präzise und flexible angebracht werden. Der gut kontrollierte Ablauf des Schweißverfahrens ermöglicht das Aufbringen von kleinsten, sehr exakt positionierbaren und reproduzierbaren Schweißpunkten (Größe 0,7 bis 2,0 mm) hoher Qualität.
- Die Vorrichtung ist kostengünstig und flexibel anwendbar. Sie eignet sich auch zum Schweißen dünner Bleche und Drähte.
- Die Vorrichtung ist besonders gut dort anwendbar, wo kleine Metallteile geschweißt werden müssen. Besonders gut ist sie geeignet, wenn vor dem Löten kleine Metallteile fixiert werden sollen.
- Die Wärmeentwicklung durch den Schweißvorgang ist gering.
- Es erfolgt nur eine sehr geringe Oxidation.
- Eine besonders gute Eignung ist beim Schweißen von Gold, Platin, Edelstahl oder Silber gegeben.

In der Zeichnung ist ein Ausführungsbeispiel der Erfindung dargestellt. Es zeigen:
- **Fig. 1**: schematisch die zeitliche Abfolge der einzelnen Verfahrensschritte beim Schweißen,
- **Fig. 2**: den Verlauf des Schweißstroms über der Zeit,
- **Fig. 3**: ein Schweißhandstück zum Lichtbogenschweißen,
- **Fig. 4**: eine Schaltungsanordnung zum Erkennen der Berührung zwischen Schweißelektrode und zu schweißendem Gut,
- **Fig. 5**: schematisch einen Mikroprozessor in seiner Wechselwirkung mit den anderen Elementen der Schweißvorrichtung und
- **Fig. 6**: schematisch verschiedene elektrische und elektronische Elemente und deren Zusammenwirken für die Durchführung des Schweißvorganges.

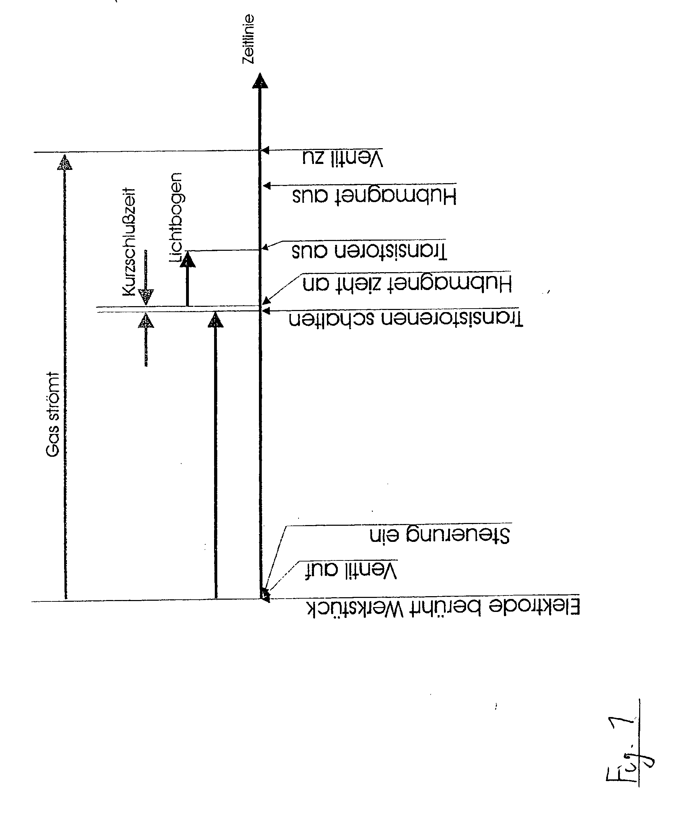

In **Fig. 1** ist die zeitliche Abfolge der einzelnen Verfahrensschritte beim Lichtbogenschweißen skizziert. Zum Zeitpunkt Null (also ganz links auf dem Zeitstrahl) beginnt der Schweißvorgang mit dem Aufsetzen der Elektrode auf das zu schweißende Gut, also auf das Werkstück. Hinsichtlich des Erkennens des Kontakts zwischen Elektrode und Werkstück sei Folgendes angemerkt:

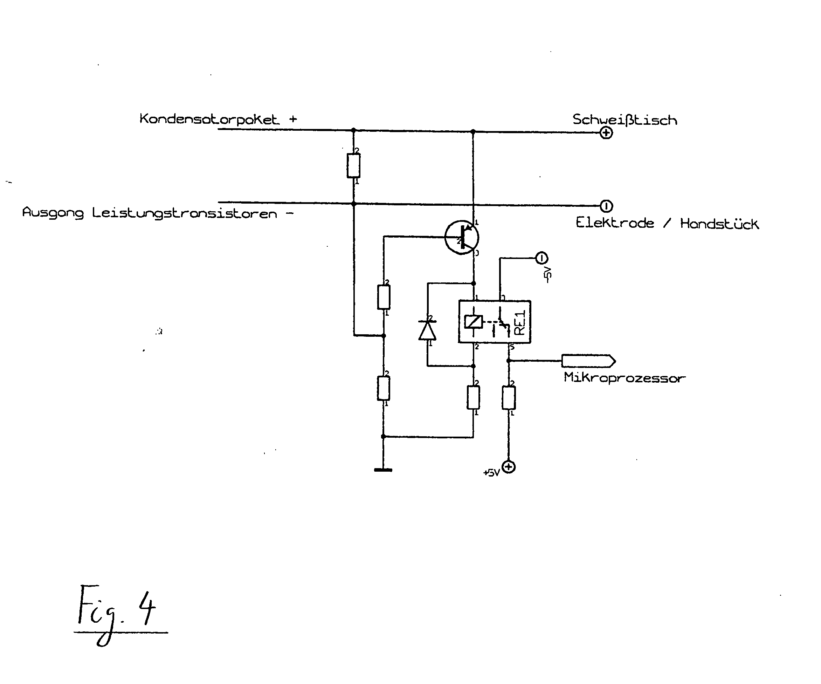

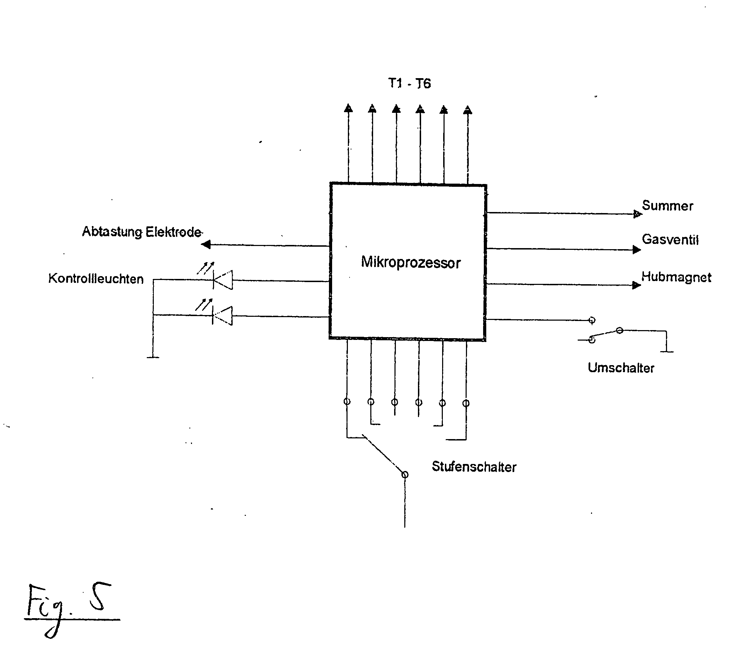

In **Fig. 4** ist eine Schaltungsanordnung skizziert, die zum Erkennen der Berührung zwischen Schweißelektrode und zu schweißendem Gut dient. Es handelt sich hierbei um eine standardmäßige elektronische Schaltung, bestehend aus Schaltern, Transistoren, Dioden und Widerständen, die für den Fachmann hinlänglich geläufig ist. Zwei Anschlüsse (rechts oben) führen zum Schweißtisch (also zum Werkstück) und zur Schweißelektrode (also zum Handstück). Bei der Berührung zwischen Schweißelektrode und Werkstück stellt die skizzierte Schaltungsanordnung den Kontakt fest und gibt ein Signal an den später noch näher beschriebenen Mikroprozessor (**Fig. 5**).

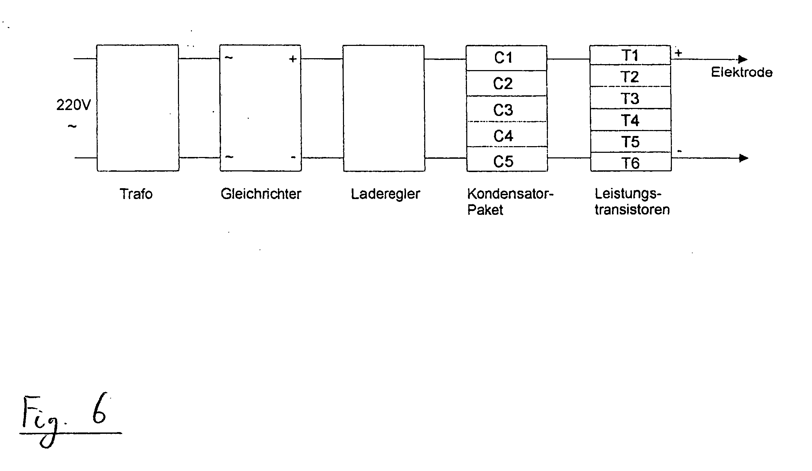

Der Mikroprozessor veranlasst als erstes, dass sich ein Gasventil öffnet, das Schutzgas an die Kontaktstelle zwischen Elektrode und Werkstück leitet (s. **Fig. 1**). Nach Ablauf einer voreingestellten und im Mikroprozessor gespeicherten Zeit - zwischen 0,5 und 10 Sekunden, vorzugsweise zwischen 2 und 4 Sekunden - veranlasst dieser, dass Leistungstransistoren (T1 bis T6, s. **Fig. 5** und **6**) schalten. Noch herrscht Kontakt zwischen Schweißelektrode und Werkstück; folglich entsteht nach der Schaltung der Leistungstransistoren ein Kurzschluss zwischen Elektrode und Werkstück.

Nach Ablauf einer weiteren Zeit, die im Mikroprozessor gespeichert ist - zwischen 0,5 und 50 Millisekunden -, wird ein nachfolgend noch näher beschriebener elektrischer Hubmagnet aktiviert, der es veranlasst, dass die Schweißelektrode um einen vorgegebenen Verschiebeweg - vorzugsweise weniger als 5 Millimeter, insbesondere zwischen 1 und 2 Millimetern - zurückgezogen und damit vom Werkstück abgezogen wird. Der Kurzschluss ist damit unterbrochen und es bildet sich aufgrund des Stromflusses zwischen Schweißelektrode und Werkstück ein Lichtbogen aus, mit dem der Schweißvorgang durchgeführt werden kann. Das Schweißen ist beendet, wenn die Transistoren - vom Schweißer veranlasst und vom Mikroprozessor gesteuert - den Schweißstrom abschalten. Später werden der elektrische Hubmagnet abgeschaltet und das Gasventil geschlossen.

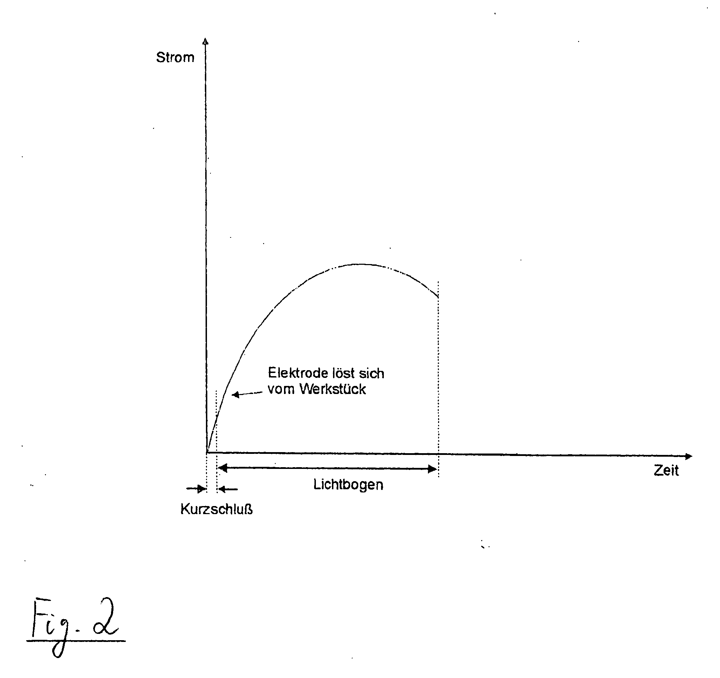

In **Fig. 2** ist zu sehen, wie der Schweißstrom ab dem Zeitpunkt, zu dem die Transistoren den Strom einschalten, bis zu dem Zeitpunkt, zu dem sie den Strom wieder abschalten, verläuft. Ab dem Einschaltzeitpunkt steigt der Strom stetig und kontinuierlich, jedoch allmählich an, nicht schlagartig; ein "Ankleben" der Elektrode am Werkstück wird damit verhindert. Bei noch relativ geringem Strom hebt etwas später die Elektrode - ausgelöst durch die Aktivierung des Hubmagneten - vom Werkstück ab; der Kurzschluss ist beendet und der Lichtbogen baut sich auf, d. h er wird gezündet. Die Steuerung durch den Mikroprozessor (s. **Fig. 5**) bewirkt ein gleichmäßiges Ansteigen des Schweißstroms in der Anfangsphase der Kondensatorentladung.

Während sich die Elektrode vom Werkstück weg bewegt, entlädt sich ein Stromimpuls über den Lichtbogen. Durch die Elektroden-Wegbewegung wird der elektrische Widerstand im Lichtbogen während der Impulsdauer stetig größer, wodurch die elektrische Leistung im Verlauf des Impulses entsprechend abnimmt. Das Ergebnis ist ein "weiches" Aufschmelzen der Metalloberfläche am Werkstück.

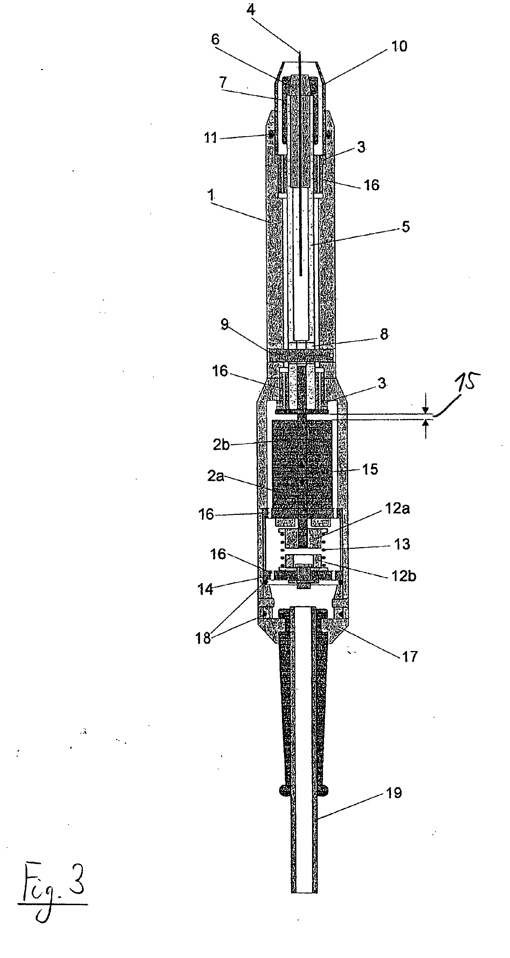

In **Fig. 3** ist der Aufbau eines Schweißhandstücks zum Lichtbogenschweißen skizziert. Es weist ein Gehäuse 1 auf, das abschnittsweise rohrförmig ausgestaltet ist. Im Gehäuse 1 ist ein Hubmagnet 2 angeordnet, der aus einer zylinderförmigen elektrischen Spule 2b und einer Stange 2a besteht. Durch Versorgung der Spule 2b mit Strom kann die Stange 2a relativ zur Spule 2b in Längsrichtung der Spule 2b bzw. Stange 2a bewegt werden. Die Stange 2a ist mit einer Hubstange 5 aus Edelstahl verbunden. Diese weist ein Langloch auf, das von einer Nylonschraube 9 durchsetzt wird. Damit ist die Hubstange 5 gegen Verdrehen gesichert, jedoch im Rahmen der Erstreckung des Langlochs in Achsrichtung des Gehäuses 1 beweglich. Die Hubstange 5 ist an ihrem der Stange 2a abgewandten Ende in einem Kunststoffgleitlager 3 gelagert. In diesem Endbereich ist die Hubstange 5 mit einer Spannzange 6 verbunden, die die Schweißelektrode 4 trägt. Die Schweißelektrode 4 aus Wolfram hat eine Stärke von 0,5 mm, die Spitze ist angeschliffen. Den festen Verbund von Hubstange 5, Spannzange 6 und Elektrode 4 stellt eine Verschraubung 7 sicher. Über die Verschraubung 7 ist eine Düse 10 gesteckt, die mit einem O-Ring 11 fixiert und somit leicht abnehmbar ist.

An dem Ende der Stange 2a des Hubmagneten 2, das von der Elektrode 4 abgewandt ist, ist eine Metallbuchse 12a angeordnet. Sie dient als Aufnahme für eine Schraubenfeder 13, die mit ihrem anderen Ende in einer zweiten Metallbuchse 12b gelagert ist. Die Metallbuchse 12b ist auf einer Kunststoffscheibe 14 befestigt, die elektrisch isoliert aber axial fest im Gehäuse 1 angeordnet ist. Die Stange 2a des Hubmagneten 2 ist so platziert, dass sie eine kleine Hubbewegung 15 relativ zur Spule 2b ausüben kann, die axial fest im Gehäuse angeordnet ist. Das bedeutet, dass die Elektrode 4 in Achsrichtung des Gehäuses 1 um den Wegbetrag der Hubbewegung 15 beweglich ist. Diese Hubbewegung 15 wird für das verfahrensgemäße Rückziehen der Elektrode vom Werkstück genutzt.

Die Schraubenfeder 13 - als Druckfeder wirkend - wirkt der Rückziehbewegung der Elektrode 4 (in Richtung vom zu schweißenden Werkstück weg) entgegen. Wenn der Hubmagnet 2 also abgeschaltet ist, wird die Elektrode durch die Feder 13 über die Stange 2a wieder in Richtung Werkstück vorgedrückt. Gleichzeitig dient die Feder 13, wie die anderen inneren Teile des Handstücks, der Durchleitung des Schweißstroms zur Elektrode 4. Die inneren Teile des Handstücks sind also elektrisch leitend verbunden und gegenüber dem Gehäuse 1 isoliert. Die isolierten Verbindungen der inneren stromführenden Teile mit dem Gehäuse sind so ausgeführt, dass das Schutzgas ungehindert durch das Gehäuse 1 strömen kann und zur Düse 10 gelangt. Hierzu sind verschiedene Bohrungen 16 eingebracht.

Das Handstück ist mit einem Deckel 17 und O-Ringen 18 gasdicht verschlossen. Die Verbindung des Handstücks mit dem eigentlichen Schweißgerät, das den elektrischen Strom liefert, wird mittels eines Silikonschlauches 19 bewerkstelligt, durch den neben den notwendigen Kabelverbindungen auch das Schutzgas geführt wird.

Die Art und Weise, wie der elektrische Schweißstrom dem Handstück zur Verfügung gestellt wird, ist in den **Figuren 4** bis **6** zu sehen. **Fig. 4** wurde bereits oben beschrieben. Es handelt sich um eine Schaltung, mit der die Kontaktnahme der Elektrode 4 mit dem zu schweißenden Gut erkannt werden kann. Die Schaltung steht mit dem Schweißtisch (Werkstück), der Elektrode (Handstück), dem Ausgang der Leistungstransistoren und dem Kondensatorpaket in Verbindung. Ferner liefert sie ein Signal an den Mikroprozessor, der in **Fig. 5** skizziert ist.

Der Mikroprozessor ist die zentrale Schalt-, Steuer- und Regeleinheit der Schweißvorrichtung, der durch seine Programmierung alle Abläufe und insbesondere die Ansteuerung der Leistungstransistoren veranlasst. In **Fig. 5**, links oben, ist zunächst skizziert, dass der Mikroprozessor mit der Abtastung der Elektrode, also mit der Schaltung gemäß **Fig. 4**, in Verbindung steht. Der Mikroprozessor aktiviert zeitgesteuert das Gasventil (zur Versorgung der Schweißstelle mit Schutzgas), den Summer (akustisches Warngerät, das vor dem gleich entstehenden Lichtbogen warnt) und den Hubmagnet 2, s. **Fig. 3**. Ferner aktiviert der Mikroprozessor die Leistungstransistoren T1 bis T6, die in der Lage sind, abhängig von ihrer Aktivierung durch den Mikroprozessor unterschiedlich starke Schweißströme zu schalten. Hierfür wirkt der Mikroprozessor mit einem Stufenschalter zusammen, an dem die Schweißleistung eingestellt werden kann.

Weiterhin ist ein Umschalter vorgesehen, der es ermöglicht, die Schweißvorrichtung auf unterschiedliche zu schweißende Materialien einzustellen. Abhängig von den Eigenschaften des zu schweißenden Metalls bzw. der zu schweißenden Legierung können also die Schweißparameter eingestellt werden. Namentlich erfolgt eine Anpassung an den Schmelzbereich der Metalle. Gold- und Silberlegierungen haben einen Schmelzbereich um ca. 900 °C, Platin- und Stahllegierungen haben einen Schmelzbereich um ca. 1.800 °C.

Ferner steuert der Mikroprozessor auch die Kontroll-Leuchten der Schweißeinrichtung.

In **Fig. 6** ist zu sehen, dass hinter einem Trafo, der mit Wechselspannung von 220 V versorgt wird, ein Gleichrichter sitzt und hinter diesem wiederum ein Laderegler. Dieser versorgt ein Kondensatorpaket, das vorliegend aus fünf gestapelten Kondensatoren besteht. Es handelt sich hierbei um parallel geschaltete, kurzschlussfeste Leistungskondensatoren von zusammen ca. 60.000 µF. Diese werden mittels einer Ladesteuerung mit ca. 40 V geladen. Der Minuspol des Kondensatorpakets liegt an den Leistungstransistoren T1 bis T6 an, die je nach eingestellter Leistungsstufe einzeln oder parallel zueinander schalten. Die Leistungstransistoren stehen wiederum mit der Schweißelektrode in Verbindung.

Der Schweißimpuls (Kondensatorentladung) wird also durch die Leistungstransistoren geschaltet. Diese werden unabhängig voneinander vom Mikroprozessor angesteuert. Je nach voreingestellter Leistungsstufe schaltet einer, zwei oder mehrere der Transistoren gleichzeitig eine genau definierte Leistung für einen vom Programm bestimmten Zeitpunkt frei. Die für jede Leistungsstufe erforderlichen unterschiedlichen Parameter sind im Mikroprozessor gespeichert.

Der Schweißimpuls wird durch die Leistungstransistoren für einen Zeitraum von 1,0 bis 20 ms eingeschaltet. Angesteuert werden die Leistungstransistoren durch ein entsprechendes Signal des Mikroprozessors. Der Schweißimpuls wird gegebenenfalls - das hängt vom zu schweißenden Material ab - in mehrere Einzelimpulse aufgeteilt, wobei die Zeitintervalle zwischen den einzelnen Impulsen sowie die Länge der Einzelimpulse entscheidend für das Schweißergebnis sein können.

Nicht dargestellt ist der vom Schweißsystem betätigte bzw. angesteuerte LCD-Automatik-Schweißer-Sichtschutzfilter. Dieser ist mittels einer Signalleitung mit dem Schweißgerät verbunden. Ein vom Mikroprozessor ausgehendes Signal schaltet den Filter ca. 100 ms vor der Freigabe des Schweißimpulses bis kurz nach abgeschlossener Schweißung, so dass das Filter zum Schutz der Augen des Schweißers von der hellen Schutzstufe auf die dunkle schaltet.

Als eine denkbare Alternative kann vorgesehen sein, dass der Start des Schweißverfahrens nicht durch Aufsetzen der Schweißelektrode auf das Werkstück, sondern durch die Betätigung eines Fußschalters erfolgt.

## Patentansprüche

1. Verfahren zum Schweißen, insbesondere zum Herstellen kleiner und kleinster Schweißpunkte, bei dem ein Schweißhandstück mit einer Schweißelektrode (4) an das zu schweißende Gut herangeführt und der Schweißvorgang durch Fluss eines elektrischen Stromes durchgeführt wird,
**dadurch gekennzeichnet,**
**dass** es folgende Schritte aufweist:
a) Aufsetzen der Schweißelektrode (4) auf das zu schweißende Gut bei abgeschaltetem Schweißstrom;
b) Einschalten des Schweißstromes;
c) Zurückziehen der Schweißelektrode (4) um einen vorbestimmten Weg durch Aktivieren eines Mittels (2, 2a, 2b), das eine translatorische Verschiebung der Schweißelektrode (4) veranlasst, um durch Schaffung eines Abstandes (15) zwischen Schweißelektrode (4) und zu schweißendem Gut einen Lichtbogen zu erzeugen;
d) Durchführung des Schweißvorganges unter Nutzung der vom Lichtbogen erzeugten Temperaturerhöhung.

2. Verfahren nach Anspruch 1,
**dadurch gekennzeichnet,**
**dass** der Schritt b) gemäß Anspruch 1 nach einer vorgebbaren Zeit erfolgt, nachdem der Kontakt zwischen Schweißelektrode (4) und zu schweißendem Gut nach Schritt a) gemäß Anspruch 1 hergestellt ist.

3. Verfahren nach Anspruch 2,
**dadurch gekennzeichnet,**
**dass** die vorgebbare Zeit zwischen 0,5 und 10 Sekunden, vorzugsweise zwischen 2 und 4 Sekunden, liegt.

4. Verfahren nach einem der Ansprüche 1 bis 3,
**dadurch gekennzeichnet,**
**dass** der Schritt c) gemäß Anspruch 1 nach einer vorgebbaren Zeit erfolgt, nachdem der Schweißstrom nach Schritt b) gemäß Anspruch 1 eingeschaltet ist.

5. Verfahren nach Anspruch 4,
**dadurch gekennzeichnet,**
**dass** die vorgebbare Zeit zwischen 0,5 und 50 Millisekunden liegt.

6. Verfahren nach einem der Ansprüche 1 bis 5,
**dadurch gekennzeichnet,**
**dass** der Schweißstrom nach seinem Einschalten nach Schritt b) gemäß Anspruch 1 allmählich ansteigt.

7. Verfahren nach einem der Ansprüche 1 bis 6,
**dadurch gekennzeichnet,**
**dass** zumindest während des Schrittes d), vorzugsweise zumindest während der Schritte b) bis d), gemäß Anspruch 1 ein inertes Gas, vorzugsweise Argon, zwischen das zu schweißende Gut und die Schweißelektrode (4) geleitet wird.

8. Verfahren nach Anspruch 7,
**dadurch gekennzeichnet,**
**dass** die Einleitung des inerten Gases zwischen das zu schweißende Gut und die Schweißelektrode (4) automatisch gestartet wird, sobald die Schweißelektrode (4) auf das zu schweißende Gut nach Schritt a) gemäß Anspruch 1 aufgesetzt ist.

9. Verfahren nach einem der Ansprüche 1 bis 8,
**dadurch gekennzeichnet,**
**dass** vor dem Einschalten des Schweißstromes nach Schritt b) gemäß Anspruch 1 ein Signal, insbesondere ein akustisches Signal, ausgelöst wird.

10. Verfahren nach Anspruch 9,
**dadurch gekennzeichnet,**
**dass** die Auslösung des Signal 0,5 bis 2 Sekunden, vorzugsweise 1 Sekunde, vor dem Einschalten des Schweißstromes erfolgt.

11. Vorrichtung nach einem der Ansprüche 1 bis 10,
**dadurch gekennzeichnet,**
**dass** das Zurückziehen der Schweißelektrode (4) nach Schritt c) gemäß Anspruch 1 um einen translatorischen Verschiebebetrag von weniger als 5 Millimeter, vorzugsweise um einen Verschiebebetrag zwischen 1 und 2 Millimetern, erfolgt.

12. Vorrichtung zum Schweißen, insbesondere zum Herstellen kleiner und kleinster Schweißpunkte, insbesondere zum Durchführen des Verfahrens nach einem der Ansprüche 1 bis 11, die ein Schweißhandstück mit einer Schweißelektrode (4) aufweist, die an das zu schweißende Gut herangeführt und der Schweißvorgang durch Fluss eines elektrischen Stromes durchgeführt wird,
**dadurch gekennzeichnet,**
**dass** die Schweißelektrode (4) relativ zum Schweißhandstück translatorisch verschiebbar angeordnet ist, wobei zur translatorischen Verschiebung im Schweißhandstück Bewegungsmittel (2, 2a, 2b) angeordnet sind.

13. Vorrichtung nach Anspruch 12,
**dadurch gekennzeichnet,**
**dass** die Bewegungsmittel (2, 2a, 2b) aus einem elektrischen Magneten bestehen, der die Schweißelektrode (4) zwischen mindestens zwei Stellungen hin und her bewegen kann.

14. Vorrichtung nach Anspruch 12 oder 13,
**dadurch gekennzeichnet,**
**dass** die von dem Bewegungsmittel (2, 2a, 2b) veranlasste translatorische Verschiebung weniger als 5 Millimeter, vorzugsweise zwischen 1 und 2 Millimeter, beträgt.

15. Vorrichtung nach einem der Ansprüche 12 bis 14,
**dadurch gekennzeichnet,**
**dass** die Bewegungsmittel (2, 2a, 2b), insbesondere der elektrische Magnet, eine zylinderförmige Spule (2b) und eine in dieser konzentrisch geführte Stange (2a) aufweisen, wobei Spule (2b) und Stange (2a) in einem abschnittsweise rohrförmigen Gehäuse (1) des Schweißhandstücks so angeordnet sind, dass ihre Längsachsen in Achsrichtung des Gehäuses verlaufen.

16. Vorrichtung nach Anspruch 15,
**dadurch gekennzeichnet,**
**dass** die Schweißelektrode (4) direkt oder indirekt von einer Hubstange (5) gehalten wird, die mit den Bewegungsmitteln (2, 2a, 2b), insbesondere mit der Stange (2a) des elektrischen Magneten (2), verbunden ist, wobei die Hubstange (5) konzentrisch im Gehäuse (1) des Schweißhandstücks verläuft.

17. Vorrichtung nach einem der Ansprüche 12 bis 16,
**dadurch gekennzeichnet,**
**dass** die Bewegungsmittel (2, 2a, 2b), insbesondere der elektrische Magnet, mit einem elastischen Element (13) in Verbindung stehen, das die Schweißelektrode (4) in eine translatorische Richtung vorspannt.

18. Vorrichtung nach Anspruch 17,
**dadurch gekennzeichnet,**
**dass** das elastische Element (13) eine Schraubenfeder ist.

19. Vorrichtung nach Anspruch 17 oder 18,
**dadurch gekennzeichnet,**
**dass** das elastische Element (13), insbesondere die Schraubenfeder, die Schweißelektrode (4) in Richtung auf das zu schweißende Gut zu vorspannt.

20. Vorrichtung nach einem der Ansprüche 12 bis 19,
**dadurch gekennzeichnet,**
**dass** die Schweißelektrode (4) elektrisch mit einer Stromversorgungseinrichtung verbindbar ist, die mindestens einen Kondensator, vorzugsweise eine Anzahl gestapelter Kondensatoren, aufweist.

21. Vorrichtung nach einem der Ansprüche 12 bis 20,
**dadurch gekennzeichnet,**
**dass** sie eine elektronische Schalt-, Steuer- und/oder Regeleinheit, insbesondere einen Mikroprozessor, aufweist, die zumindest die translatorische Bewegung der Schweißelektrode (4) und den Fluss des elektrischen Stromes zwischen Schweißelektrode (4) und zu schweißendem Gut veranlasst, steuert oder regelt.

22. Vorrichtung nach Anspruch 21,
**dadurch gekennzeichnet,**
**dass** sie mehrere voneinander unabhängig schaltbare Leistungstransistoren zum Schalten des Schweißstromes aufweist, die von der elektronischen Schalt-, Steuer- und/oder Regeleinheit, insbesondere von dem Mikroprozessor, angesteuert werden.

23. Vorrichtung nach Anspruch 22,
**dadurch gekennzeichnet,**
**dass** die Leistungstransistoren so schaltbar sind, dass unterschiedlich hohe Schweißströme zwischen Schweißelektrode (4) und zu schweißendem Gut wirken.

24. Vorrichtung nach einem der Ansprüche 12 bis 23,
**dadurch gekennzeichnet,**
**dass** die Schweißelektrode (4) aus Wolfram besteht.

25. Vorrichtung nach einem der Ansprüche 12 bis 24,
**gekennzeichnet durch**
eine Einrichtung zur Ansteuerung eines LCD-Schweißersichtschutzfilters.

26. Vorrichtung nach Anspruch 25,
**dadurch gekennzeichnet,**
**dass** die Einrichtung Teil der elektronischen Schalt-, Steuer und/oder Regeleinheit ist.
